(19) Europäisches Patentamt
European Patent Office
Office européen des brevets

(11) **EP 2 380 922 A1**

(12) **EUROPEAN PATENT APPLICATION**

(43) Date of publication:
26.10.2011 Bulletin 2011/43

(51) Int Cl.:
*C08J 9/00* (2006.01)          *C08J 9/14* (2006.01)
*A61L 27/18* (2006.01)

(21) Application number: 11163522.3

(22) Date of filing: **21.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.04.2010 US 765261**

(71) Applicants:
• **Ramesh, Natarajan S.**
Grapevine TX 76051 (US)
• **Nawaby A., Victoria**
Southlake TX 76092 (US)
• **Amrutiya, Nilesh**
Irving TX 75062 (US)

(72) Inventors:
• **Ramesh, Natarajan S.**
Grapevine TX 76051 (US)
• **Nawaby A., Victoria**
Southlake TX 76092 (US)
• **Amrutiya, Nilesh**
Irving TX 75062 (US)

(74) Representative: **Duckworth, Timothy John**
J.A. Kemp & Co.
**14 South Square**
**Gray's Inn**
**London WC1R 5JJ (GB)**

(54) **Polylactic acid foam composition**

(57)    A foam precursor mixture of polylactic acid (PLA) resin having a D-lactic acid content that is about 3 mole % or less; nucleating agent; chain extender; and hydrocarbon blowing agent is provided. The foaming mixture is substantially free of a crosslinking agent. The foam premixture can be used to prepare PLA foams having improved heat resistance, lower densities, smaller cells, and higher cell counts. PLA foams in accordance with the invention may be useful for preparing thermoformed articles such as trays. PLA foamed articles may be prepared that exhibit heat resistance above a temperature of about 49° C or more, and in particular, a heat resistance at 5 minutes of exposure in excess of about 74° C.

FIG. 1A

EP 2 380 922 A1

**Description**

BACKGROUND

Traditionally, many packaging materials are prepared from thermoplastic polymers, such as polystyrene, polyethylene, and polypropylene. These polymers are generally very stable and can remain in the environment for a long time. Recently, however, there has been a trend to develop articles and products that are considered environmentally friendly and sustainable. As part of this trend, there has been a desire to produce ecologically friendly and biodegradable packaging products.

One promising polymer that may meet this desire is polylactic acid (PLA). Polylactic acid, also known as polylactide, is a biodegradable, thermoplastic, aliphatic polyester derived from renewable resources, such as sugar, starch, or cellulose. PLA is promising because it is manufactured from natural substances, such as corn, and therefore may provide a sustainable alternative to petrochemical-derived products. In addition, to biodegradability, PLA has good biocompatibility with human tissue and can be used in both *in vitro* and *in vivo* applications.

However, PLA has several disadvantages that have limited its use in packaging and other applications. In particular, foamed articles comprising PLA resins are generally dimensionally stable at temperatures up to about 49° C. This low dimensional stability at elevated temperatures can be particularly problematic during summer months when temperatures to which packaging articles comprising PLA may be exposed to relatively high temperatures during storage or transportation.

Several approaches have been developed to address these problems. One approach includes the use of a crosslinking agent, such as peroxide, in the foam. For example, crosslinking the foam matrix can help to increase the extensional viscosity (melt strength) of the polymer and minimize cell wall collapse. Other approaches include blending PLA with one or more additional polymer resins, such as styrene or a polyolefin. However, the addition of crosslinking or other non-biodegradable polymers in the foam reduces the ability of the foam to decompose. Further, inducing crosslinking in the foam generally requires an additional step which can add to the complexity and cost of producing the foam.

Accordingly, a need still exists for biodegradable PLA foams having improved properties.

SUMMARY

One or more embodiments of the present invention may address one or more of the aforementioned problems. One embodiment provides a foam precursor mixture comprising a polylactic acid (PLA) resin having a D-lactic acid content that is about 3 mole % or less; a nucleating agent; a chain extender; and a hydrocarbon blowing agent. The foam precursor has improved melt strengths wherein the foaming mixture is substantially free of a crosslinking agent.

Embodiments of the foam precursor mixture may be used to prepare PLA foams having improved heat resistance, lower densities, smaller cells, and higher cell counts. PLA foams in accordance with various embodiments of the present invention are particularly useful for preparing thermoformed articles such as trays. In some embodiments, PLA foamed articles can be prepared that exhibit heat resistance above a temperature of about 49° C, and in particular, a heat resistance after 5 minutes of exposure above about 74° C.

BRIEF DESCRIPTION OF THE SEVERAL VIEWS OF THE DRAWING(S)

Having thus described embodiments of the invention in general terms, reference will now be made to the accompanying drawings, which are not necessarily drawn to scale, and wherein:

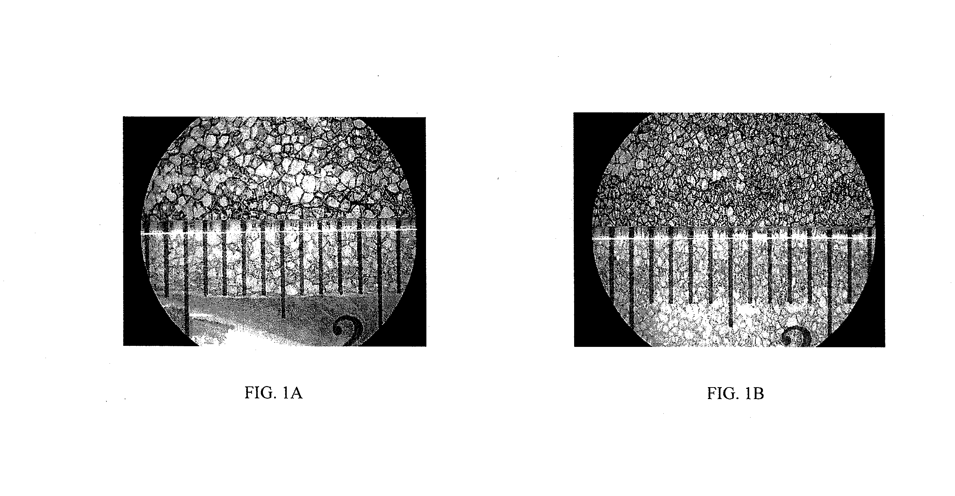

FIGS. 1A and 1B are micrograph images of an inventive foam sample and a comparative foam sample, respectively, that shows an improvement in cell count and size that can be obtained in accordance with embodiments of the present invention.

DETAILED DESCRIPTION

Various embodiments of the present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements.

Embodiments of the present invention include foam precursor mixtures (i.e., foamable compositions) and the foams comprising as a major component polylactic acid (i.e., polylactic acid foams) that may be prepared from the foam precursor mixtures. Also provided as further embodiments are methods for preparing polylactic acid foams. Polylactic acid foams in accordance with some embodiments of the present invention have improved heat resistance and melt strengths. Additionally, polylactic acid foams in accordance with some embodiments of the invention may have improved melt strengths and may be prepared in the absence of crosslinking agents and/or polymer resin derived from petrochemicals (i.e., synthetic polymer resin).

In one embodiment, a foam precursor mixture (i.e., a foamable premixture) comprises a polylactic acid resin having a D-lactic acid content that is about 3 mole % or less, a nucleating agent, a chain extender, and a hydrocarbon blowing agent, and that is substantially free of a crosslinking agent.

Suitable PLA polymers that can be used in the practice of the embodiments of invention include PLA polymers having a D-lactic acid content that is about 3 mole % or less, and in particular, a D-lactic acid content that is about 2 mole % or less. An example of a suitable PLA polymer is PLA 4032D grade, which has a D-lactic acid content of about 2 mole %, and is produced by NatureWorks LLC under the trade name NATURE WORKS®. The percent of PLA polymer in the foam precursor mixture, or in the foam, may be any combination of at least about 85 weight percent, at least about 90 weight percent, at least about 94 weight percent, and at most about 98 weight percent, based on the total weight of the composition, for example, from about 90 to about 98 weight percent, and from about 94 to about 98 weight percent.

The chain extender agent (i.e., chain extender) in combination with the other components of the precursor foam mixture helps to increase the viscosity and melt strength of the foam precursor mixture to facilitate a foam structure having increased melt strength, higher cell densities and smaller cells. Suitable chain extenders that may be used in embodiments of the present invention include epoxy-based chain extenders, for example, an epoxy-based chain extender available from Clariant under the trade name CESA® Joncryl 4368. The amount of chain extender agent may range, for example, from about 0.5 to about 5 weight %, or from about 0.5 to about 4 weight percent, or from about 0.5 to about 1 weight percent, based on the total weight of the foamable composition. Although it may be possible for a chain extender to induce some crosslinking in the foam, this is not the primary function of a chain extender, and is only incidental to the primary function of the chain extender, which is to chemically attach to the PLA polymer in order to extend the polymer chain, thereby increasing viscosity and melt strength. Accordingly, the phrase "substantially free of a crosslinking agent" used in characterizing the foam precursor mixture or the foam means that the mixture or foam lacks an agent having a primary function of crosslinking the PLA chains. Thus, a chain extender is not a crosslinking agent and the foam precursor mixture and the foam may be "substantially free of crosslinking agent" if the mixture or foam includes chain extender agent and lacks crosslinking agent.

Suitable nucleating agents for use in embodiments of the present invention may include inorganic nucleating agents and organic nucleating agents. Useful inorganic nucleating agents include talc, calcium carbonate, calcium silicate, indigo, clay, mica, kaolin, titanium dioxide, and silica. Useful organic nucleating agents include metal salts of fatty acids, such as zinc stearate and calcium stearate. The nucleating agents may be used alone or in combination. A suitable organic nucleating agent is PLA na S516 available under the trade name SUKANO®. In one embodiment, the foam includes a combination of talc and an organic nucleating agent, such as PLA na S516.

The nucleating agent may be present in an amount from about 0.1 to 10 weight percent based on the total weight of the polylactic acid resin, and in particular from about 0.1 to 5 weight percent, based on the total weight of the polylactic acid resin. In one embodiment, the nucleating agent is present in an amount from about 0.1 to 2 weight percent based on the total weight of the polylactic acid resin

The foam precursor mixture may comprise blowing agent in at least about, and/or in at most about, any of the following amounts based on the total weight of the foam precursor mixture: 2, 3, 4, 5, 6, 7, 8, 9, and 10%. For example, the foam precursor mixture may comprise from about 3 to about 7 wt. % blowing agent. The blowing agent used for the foam precursor mixtures and in the production of PLA foams may comprise one or more hydrocarbon blowing agents having from 1 to 8 carbons. Suitable hydrocarbon blowing agents include propane, n-butane, iso-butane, n-pentane, isopentane, hexane, heptane, octane and combinations thereof. In one embodiment, the blowing agent comprises a blend of n-pentane and iso-butane in an 80/20 weight % ratio. The blowing agent may comprise from about 70 to about 90 weight percent of a relatively heavier weight hydrocarbon blowing agent and from about 10 to about 30 wt. percent of a relatively lighter weight hydrocarbon blowing agent, based on the total weight of hydrocarbon blowing agent, for example, from about 70 to about 90 wt. % n-pentane and from about 10 to about 30 wt. % iso-butane. In some embodiments, the foam precursor mixture may comprise non-hydrocarbon blowing agent (e.g., inert gas blowing agent such as carbon dioxide) in combination with the hydrocarbon blowing agent or alternative to the hydrocarbon blowing agent.

The foam precursor mixture may comprise additives of the type and at the concentration conventionally used in the manufacture of foams. These additives may be present in the mixture at a concentration of about 0.05 to about 3 percent by weight of the total composition. Examples of suitable additives include fillers, pigments, antioxidants, UV stabilizers, thermal stabilizers, flame retardants, slip agents, antistatic agents, antimicrobial agents, photostabilizers, lubricants, antiblocking agents, smoke suppressants, and surfactants.

Foam in accordance with embodiments of the present invention may be characterized by improved melt strengths and heat resistance, low densities, and high cell counts. The "heat resistance" of a foamed article in accordance with the invention is measured by placing the article on an oven rack inside an oven pre-heated to a selected oven temperature at which the heat resistance is to be evaluated. If the foam article maintains dimensional stability for a selected amount of time of exposure, then the article is the considered to have a "heat resistance" at the oven temperature (reported with the selected amount of time of exposure). Embodiments of foams of the present invention exhibit good heat resistance, for example, thermoformed PLA foam trays had a heat resistance of 66° C (exposure for 5 minutes). Foam trays that have a heat resistance of at least 66° C after 5 minutes of exposure are considered to have good heat resistance. The foam embodiments of the present invention may have a heat resistance (after 5 minutes of exposure) of at least about any of the following: 66°C, 70°C, 74°C, 75°C, 80°C, 85°C, 90°C, 95°C, and 99°C. Advantageously and surprisingly, the improved heat resistance of embodiments of the inventive foam can be obtained from foam precursor mixture and for foam that is substantially free of crosslinking agent, and/or that is substantially free of polymer resin derived from petrochemicals.

Foamed PLA articles in accordance with embodiments of the present invention may exhibit a heat resistance from about 45 to about 100° C, and in particular, from about 74 to about 99° C at 5 minutes of exposure. In one embodiment, the PLA foam of the present invention has a heat resistance of at least about 99° C at 5 minutes of exposure.

Embodiments of the present invention provide improvement in the time that is required to prepare thermoformed PLA foam articles. A foam made from any of the foam precursor mixtures described herein may have a "half-time crystallization rate" (Recrystallization Half Time $t_{1/2}$ (s)) of less than about 15 seconds, and in particular less than about 10 seconds. Additionally, embodiments of the inventive PLA foam may also exhibit "crystalline content" that is greater than about 4% following extrusion. As a result, PLA foams in accordance with various embodiments of the invention are particularly useful in thermoforming applications. In particular, thermoformed articles may be prepared having increased crystalline content, which may provide for significant improvements in the time it takes to thermoform the foam. For example, in some embodiments of the claimed invention the time for the thermoforming step can be completed in less than a minute, and in particular less than 0.41 minutes.

In some embodiments, the crystalline content of the thermoformed PLA foam is greater than about 15%, and in particular, greater than about 20%. In one embodiment, the crystalline content of a thermoformed article prepared from the inventive PLA foam may be at least about any of the following: 15%, 20%, and 25 %; and at most about any of the following: 35%, 40%, and 45%, for example, ranging from any of about 15 to about 40%, from about 20 to about 45%, and from about 25 to about 35%.

The foam in accordance with embodiments of the present invention may have a density of less than about any of the following: 6.24 pounds/cubic foot (0.1 g/cm$^3$), 5 pounds/cubic foot (pcf) (0.08 g/cm$^3$), and 4 pcf (0.06 g/cm$^3$), as measured according to ASTM D-3575. In some embodiments, the PLA foam has a density less than about 0.1 g/cm$^3$, such as from about 2 to 5 pcf (0.032-0.08 g/cm$^3$). Foams in accordance with embodiments of the present invention can also be characterized by cell count and size. For example, the PLA foam may have an average cell size of at least about any of the following: 0.2 mm, 0.3 mm, 0.6 mm; and/or at most about 1 mm.

Foams in accordance with embodiments of the present invention can be prepared using conventional methods and extrusion equipment as are known to those of ordinary skill in the art. For example, a PLA foam in accordance with the present invention can be prepared by melt processing the PLA resin with the nucleating agent, chain extender, and blowing agent in an extruder to form a pressurized molten mixture. The chain extender may be fed into the extruder so as to feed the chain extender to the molten PLA resin through an extruder port. The chain extending reaction then takes place in the extruder barrel before cooling. The chain extender can also be added to the extruder during the foam extrusion process. The molten PLA mixture is then extruded through an extrusion die to a region of reduced pressure, where the molten mixture expands and cools to form a foam. Useful extrusion equipment includes screw extruders (e.g., single-screw extruders and twin-screw extruders) and accumulating extrusion apparatus.

In the extrusion process, the PLA resin may be heated to a temperature at or above its glass transition temperature or melting point. Suitable temperatures are at least about 160° C, and more typically at least 170° C. The hydrocarbon blowing agent may be introduced under pressure and mixed into the heated PLA resin. The nucleating and chain extending agents may be blended into the melt as noted above. Pressures during the mixing step may be maintained high enough so that foam expansion does not begin until the molten mixture passes through the extrusion die.

After all components are blended, the molten mixture may be adjusted to an extrusion temperature before being passed though the extrusion die to form the foam product. The foams may be extruded in the form of sheets, blocks, grains, or other shapes. In one embodiment, the PLA foam is extruded in the form of a sheet that can be subsequently thermoformed into a tray or other structure. Thermoforming can be carried out using conventional equipment and techniques, for example, at a forming temperature of from about 100 to about 110° C. The cycle time for the thermoforming process may be from about 30 seconds to about 2 minutes, and in particular less than about one minute.

The invention may be further understood by reference to the following examples, which are provided for the purpose of representation, and are not to be construed as limiting the scope of the invention.

EXAMPLES

The following samples were prepared using a twin-screw extruder. The materials used in the foams are identified below. All percentages are weight percents unless indicated otherwise. All physical property and compositional values are approximate unless indicated otherwise

"PLA-1": a polylactic acid polymer resin having a D-lactic acid content of 4 mole %, a density of 1.25 g/cm$^3$, and that is available from NatureWorks LLC under the tradename NATUREWORKS® grade 3051 D;

"PLA-2": a polylactic acid polymer resin having a D-lactic acid content between about 1.4 to 2 mole % and that is available from NatureWorks LLC under the tradename NATUREWORKS® grade 4032D;

"TALC": Talc nucleating agent available from Clariant S1418. "CE": CESA® Joncryl 4368: a chain extending agent that is available from Clariant;

"PB-1": n-pentane hydrocarbon physical blowing agent available from Exxon Mobil;

"PB-2": isobutane hydrocarbon physical blowing agent available from Exxon Mobil;

"NA": PLA na S516: a nucleating agent that is available under the SUKANO® trade name;

In Comparative Sample 1, PLA-1 and the other components identified in Table 1 were fed into a tandem extruder with a throughput loading capacity of 60 kg/hour. The polymer was melted and kneaded at a melt temperature of about 145° C. A mixture of n-pentane and isobutane in a 80/20 weight % ratio was used as the blowing agent to produce the foam samples. The foams were extruded into rod-shaped foam through a die having a diameter of 0.125 inches.

In Example 1, PLA-2 and the other components identified in Table 1 were fed into a tandem extruder with a throughput loading capacity 60 kg/hour. The polymer was melted and kneaded at a temperature about 159° C. A mixture of n-pentane and isobutane in a 80/20 weight % ratio was used as the blowing agent to produce the foam samples. The foam composition was then extruded into a foam rod through a die having a diameter of 0.125 inches.

PLA resin properties, foam production processing parameters, and foam properties are summarized in TABLES 1 and 2 below.

TABLE 1: PLA Resin Properties

| PLA RESIN | Resin Density (g/cm$^3$) | % D-LA content | Melt Index (g/10 min.) | Tg (°C) | Tm (°C) | ΔH (J/g) (recrystallization) | Heat Resistance (°C) |
|-----------|--------------------------|----------------|------------------------|---------|---------|------------------------------|----------------------|
| PLA-1 | 1.25 | 4 | 10 | 55-65 | 150-165 | 39 | 49 |
| PLA-2 | 1.24 | ≤ 2 | 4 | 67 | 160 | 50 | 74-99 |

TABLE 2: Foam Processing Parameters and Foam Properties

| Sample No. | Foam Formulation | Output rate (lbs/hour) | Die Pressure (psi) | Melt Processing Temp. °F (°C) | Load Primary/ Secondary (%) | Foam Density* pcf (kg/m$^3$) | Cell Count (#/inch) | Rod Foam Diameter (inch) |
|---|---|---|---|---|---|---|---|---|
| Comparative Sample 1 | 92.6 % PLA-1; 2.35 % CE; 0.40% TALC; 3.74% PB-1; 0.79% PB-2 | 12.48 | 1560 | 293.1 ( 145) | 60/18 | 3.02 (48.3) | 60-65 | 0.58 |
| Example 1 | 92.6 % PLA-2; 2.35 % CE; 0.40% TALC; 3.74% PB-1; 0.79% PB-2 | 12.54 | 1930 | 318.3 (159 ) | 69/14 | 2.4 (38.4) | 110-115 | 0.64 |
| *Measured in accordance with ASTM D-3575. | | | | | | | | |

From Table 2 above, it can be seen that the Example 1 foam comprising a polylactic acid polymer having a D-lactic acid content of less than 2 mole % provided surprisingly significant improvement in cell count and foam density compared to the Comparative Sample 1 foam having a D-lactic acid content of 4 mole %. The cell counts nearly doubled and the density of the foam was reduced by 21 %. In addition, the Example 1 foam exhibited an increase in melt processing temperature as well as die pressure. It is important to realize that the PLA-2 resin was foamed near the crystalline melt point of the polymer. In comparison, the foam of Comparative Sample 1 (PLA-1 resin) could not be foamed near the crystalline melt point of its PLA resin. Foaming near crystalline melt point of the PLA resin favors better cell stabilization particularly when the crystallization is fast to give cell integrity and higher die pressures is believed to enable foams having higher cell counts.

FIGS. 1A and 1B are 15x magnification optical micrograph images of the foams of Example 1 and Comparative Sample 1, respectively. A comparison of FIG. 1A to FIG. 1B shows the surprising result that the cells of the inventive Example 1 foam exhibit a higher cell count, are smaller in size, and have a more uniform structure relative the Comparison Sample 1 foam of FIG. 1B (figures are to be added)

The foam compositions of Comparative Sample 1 and Example 1 were also extruded in the form of sheet. The processing conditions were the same as described above with the exception that the die pressure for Comparative Sample 1 was 1204 psi, and the die pressures for the inventive example was 1308 psi. Foam density of the sheet comprising the foam composition of Comparative Sample 1 was 0.054 g/cm$^3$, and the density of the foam sheet of the inventive example was 0.042 g/cm$^3$, such that the Example 1 foam had a 22% reduction in density relative the Comparative Sample 1.

In the following Examples, the crystallinity and thermoforming properties of the inventive PLA foam were investigated and the results are summarized in Tables 3 and 4 below. The crystalline content showed in column 3 are for extruded sheets estimated through a temperature heating scan made at 10° C/minute. Column 4 shows the improvement for PLA-2 based formulation compared to PLA-1 for the as-extruded sheets. Columns 5 and 6 indicate the level of half-crystallization times obtained under isothermal conditions to show the potential of our improved formulation.

TABLE 3: Crystallinity Data of Extruded Sheets

| Sample No. | Foam Formulation | Crystalline content % | Improvement % | Crystallization Half Time t $_{1/2}$ (S) | Improvement % |
|---|---|---|---|---|---|
| Comparative Sample 2 | 91.25 % PLA-1 2.35 % CE; 0.4% TALC; 6 % PB-1 | 1.6 | N/A | 30 | N/A |
| Example 2 | 90.75% PLA-2; 2.35% CE; 0.4% Talc 6.5%PB-1/PB-2 (80/20 ratio) | 4.5 | 181 | 9.5 | 68 |
| Example 3 | 90.15% PLA-2; 2.35% CE 1% NA 6.5%PB-1/PB-2 (80/20 ratio) | 6.9 | 331 | 11.5 | 80 |
| Example 4 | 89.95% PLA-2; 2.35% CE 0.2% Talc; 1% NA; 6.5%PB-1/PB-2 (80/20 ratio) | 5.7 | 256 | 6.5 | 78 |
| Thermal and crystalline properties were measured with a TA Instrument DSC Q2000. | | | | | |

The crystalline content of the samples was calculated by DSC (Differential Scanning Calorimetry) is done by using the following steps:

1. Heating at 10°C/min is the standard speed up to some ten degrees after the melting peak;

2. Integrating the peaks getting the heat of fusion (J/g). The value of heat of fusion of 100% crystalline PLA material is approximately 93.7 J/g.

Crystalline content was calculated by using the following formula:

$$\% \text{ Crystallinity} = \frac{\text{measured heat of fusion}}{\text{Heat of fusion of 100\% crystalline PLA}} \times 100\%$$

The crystallization half-time, the samples (PLA-1 and PLA-2 foams) were tested under isothermal condition at 110 °C. For PLA-1 and PLA-2 materials, the relative crystallinity during the time was calculated and elaborated through the Avarami equation, which approximates the crystallization kinetics of polymers in isothermal conditions. The Avarami equation is as follows:

$$\ln(1 - X_c) = kt^n$$

where Xc is % crystallinity, t is the time, k and n are Avarami parameters. For calculating the half time crystallization rate at 50% crystallinity or $X_c = \frac{1}{2}$ and rearranging terms lead to the following simple equation:

$$t_{\frac{1}{2}} = (\ln 2/k)^{1/n}$$

TABLE 4: Properties of Thermoformed PLA Foam

| Sample No | Thermoform Temperature (°C) | Thermoform time (mm) | Thermoform time Improvement % | Crystalline content In foamed article % | Crystalline Content Improvement % | Heat Resistance (°C) | Heat Resistance Improvement (°C) |
|---|---|---|---|---|---|---|---|
| Comparative Sample 2 | 100-110 | < 35 | N/A | 7-7 2 | N/A | 49 | N/A |
| Example 2 | 100-110 | <041 | 99 | 19-32 | 171 - 344 | 74 -99 | 25 - 50 |
| Example 3 | 100-110 | <0 41 | 99 | 29-36 | 314 - 400 | 74-99 | 25 - 50 |
| Example 4 | 100-110 | <0 41 | 99 | 29-33 | 314 - 358 | 74-99 | 25 - 50 |

From Table 3, it can be seen that the inventive foam compositions exhibit surprisingly significant improvements in the rate of crystallization. In particular, the crystallization half life was more than 60% faster than the foam composition of Comparative Sample 2. The inventive foamed examples also exhibited surprisingly significantly increased crystalline contents as well as improvements in heat resistance. The results correspond to the shorter times needed to crystallize the foam tray to produce desired high heat resistance. The "heat resistance" of foam trays in Table 4 were evaluated by placing a foam tray upside down on the oven rack inside an oven pre-heated to a temperature at which heat resistance was to be evaluated. Typical PLA foam dimensions were 8.6" x 6.5" x 1.1" in length, width and height. The tray was placed inside the oven for 5 minutes. The trays were inspected after five minutes for loss of dimensional stability. For example, the inventive foam examples exhibited heat resistance after 5 minutes of exposure in excess of 74° C and up to 99°C as shown in Table 4. In contrast, Comparative Sample 2 had a heat resistance after 5 minutes of exposure that was about 49°C. It is believed that because of the faster crystallization rate, upon extrusion of foamed sheets, examples having the lower D-lactic acid content foam had higher base crystallinity than the samples having a higher D-lactic content. During thermoforming of the sheets, the heating step in the thermoforming process contributes to further crystallization in the foam. Accordingly, thermoformed foamed articles in accordance with embodiments of the present invention may generally have higher final crystalline content as compared to those processed with a PLA having D-lactic acid content of greater than 3 mole %, and may therefore be more heat resistant.

The improvements in the rate of crystallization and heat resistance helps provide for surprisingly significant improvements in the time to prepare thermoformed products from the inventive foam. In particular, the inventive foam sheets were capable of being thermoformed in less than a minute (e.g., in less than 0.41 minutes). In contrast, the foam of Comparative Sample 2 required up to 35 minutes to complete the thermoforming step to prepare a foam tray having a foam a heat resistance of only 49°C after 5 minutes of exposure.

Significant improvements in foam quality were also observed. For example, the Example foam exhibited more uniform and smaller cells as well as a smooth surface compared to the Comparative foam.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A foam precursor mixture comprising:

    polylactic acid having a D-lactic acid monomer content that is 3 mole % or less;
    nucleating agent;
    chain extender agent; and
    hydrocarbon blowing agent, wherein the foaming mixture is substantially free of a crosslinking agent.

2. A foam obtainable from the foam precursor mixture of Claim 1.

3. A foam according to claim 2, wherein the foam comprises:

    at least 85 percent by weight of polylactic acid having a D-lactic acid content that is about 3 mole % or less;
    from 0.1 to 5 percent by weight of a nucleating agent; and
    from 0.5 to 1 percent by weight of a chain extender agent, wherein the foam has a heat resistance after 5 minutes of exposure of about 74° C or more, and is substantially free of crosslinks formed by crosslinking agent.

4. A foam precursor mixture according to Claim 1, or a foam according to Claim 2 or Claim 3, wherein the polylactic acid has a D-lactic acid monomer content that is 2 mole % or less.

5. A foam precursor mixture according to claim 1 or claim 4 or a foam according to any one of claims 2 to 4, wherein the nucleating agent is selected from the group consisting of talc, calcium carbonate, calcium silicate, indigo, clay, mica, kaolin, titanium dioxide, silica, zinc stearate and calcium stearate, and combinations thereof, and is preferably talc.

6. A foam precursor mixture according to any one of Claims 1, 4 and 5

wherein the hydrocarbon blowing agent comprises a mixture of 70 to 90 % n-pentane and from 10 to 30 % isobutane by weight.

7. A foam precursor mixture according to any one of claims 1 and 4 to 6 or a foam according to any one of claims 2 to 5, wherein the chain extender agent is present in the mixture in an amount that is from 0.5 to about 5 weight %, and preferably from 0.5 to 1 weight %, based on the total weight of the mixture.

8. A foam precursor mixture according to any one of claims 1 and 4 to 7 or a foam according to any one of claims 2 to 5 and 7, wherein the chain extender agent comprises epoxy-based chain extender.

9. A foam precursor mixture according to any one of claims 1 and 4 to 8 or a foam according to any one of claims 2 to 5, 7 and 8, wherein a foamed article prepared from the mixture has a density of less than 0.1 g/cm$^3$ and a heat resistance of at least 74° C.

10. A foam precursor mixture according to any one of claims 1 and 4 to 9 or a foam according to any one of claims 2 to 5 and 7 to 9, wherein the amount of the polylactic acid is from about 90 to about 98 weight percent, preferably from 94 to 98 weight percent, the amount of the chain extender is from 1 to 5 weight percent, and preferably from 0.5 to 1 weight percent, and the amount of the nucleating agent is from 0.1 to 5 weight percent, and preferably 0.1 to 2 weight percent, and wherein the foam is preferably substantially free of polymer resin derived from petrochemicals.

11. A foam precursor mixture according to any one of claims 1 and 4 to 10 or a foam according to any one of claims 2 to 5 and 7 to 10, wherein the nucleating agent comprises an organic nucleating agent.

12. A foam according to any one of Claims 2, 3, 5, 7, 8, 9, or 10, wherein the foam is in the form of a thermoformed article and the foam has a crystalline content greater than about 20 %, and preferably greater than 25%.

13. A process for preparing a foam comprising:

melting a polylactic acid polymer and combining the melted polylactic acid polymer with nucleating agent and chain extending agent to form a melt mixture, the polylactic acid polymer having a D-lactic acid content that is a 3 mole % or less;
introducing hydrocarbon blowing agent into the melt mixture; and
extruding the melt mixture from a domain of high pressure to a domain of low pressure to form an extruded foam, wherein the melt mixture is substantially free of a crosslinking agent, and wherein the extruded foam preferably has a density of less than 0.1 g/cm$^3$ and a heat resistance after 5 minutes of exposure of at least 74° C.

14. A process according to Claim 13, wherein the melt mixture comprises at least 85 percent by weight of polylactic acid having a D-lactic acid content that is 2 mole % or less; from 0.1 to 5 percent by weight of nucleating agent; and from 0.5 to 1 percent by weight of chain extender agent.

15. A process according to Claim 13 or Claim 14, further comprising the step of thermoforming the extruded foam to produce a thermoformed article having a crystalline content of at least 20%, preferably at least 25%, and wherein the thermoforming step is preferably completed in less than about a minute.

FIG. 1B

FIG. 1A

Europäisches
Patentamt

European
Patent Office

Office européen
des brevets

## EUROPEAN SEARCH REPORT

Application Number

EP 11 16 3522

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 135 724 A1 (SEKISUI PLASTICS [JP]) 23 December 2009 (2009-12-23) * paragraphs [0067], [0069] * * example 1 * * claim 1 * ----- | 1-15 | INV. C08J9/00 C08J9/14 A61L27/18 |
| A | DATABASE WPI Week 200964 Thomson Scientific, London, GB; AN 2009-H37923 XP000002657136, & KR 2009 0008899 A (JEONG J) 22 January 2009 (2009-01-22) * abstract * ----- | 1-15 | |

|  |  |  | TECHNICAL FIELDS SEARCHED (IPC) |
|---|---|---|---|
|  |  |  | C08J A61L |

The present search report has been drawn up for all claims

| Place of search | Date of completion of the search | Examiner |
|---|---|---|
| The Hague | 18 August 2011 | Oudot, René |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 16 3522

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2011

| Patent document cited in search report | | Publication date | Patent family member(s) | | Publication date |
|---|---|---|---|---|---|
| EP 2135724 | A1 | 23-12-2009 | WO 2008123367 A1 <br> JP 4213200 B2 <br> KR 20090125139 A <br> US 2010136338 A1 | | 16-10-2008 <br> 21-01-2009 <br> 03-12-2009 <br> 03-06-2010 |
| KR 20090008899 | A | 22-01-2009 | NONE | | |

For more details about this annex : see Official Journal of the European Patent Office, No. 12/82